Europäisches Patentamt

European Patent Office

Office européen des brevets

(11) Veröffentlichungsnummer: **0 230 688**
**A2**

(12) **EUROPÄISCHE PATENTANMELDUNG**

(21) Anmeldenummer: 86202121.9

(51) Int. Cl.⁴: **F16J 1/18**

(22) Anmeldetag: 28.11.86

(30) Priorität: **18.01.86 DE 3601364**

(43) Veröffentlichungstag der Anmeldung:
**05.08.87 Patentblatt 87/32**

(84) Benannte Vertragsstaaten:
**DE FR IT**

(71) Anmelder: **KOLBENSCHMIDT Aktiengesellschaft**
**Karl-Schmidt-Strasse 8/12 Postfach 1351**
**D-7107 Neckarsulm(DE)**

(72) Erfinder: **Dieffenbach, Karl**
**Teutonenstrasse 107**
**D-7100 Heilbronn-Frankenbach(DE)**

(74) Vertreter: **Rieger, Harald, Dr.**
**Reuterweg 14**
**D-6000 Frankfurt am Main(DE)**

(54) **Kolbenbolzensicherung.**

(57) Bei einem Kolben mit lose gelagertem Kolbenboden und mit am Kolbenschaft im Bereich der zur Kolbenachse hin verschobenen Naben der Bolzenaugen beidseitig der horizontalen Kolbenbodenebene vorgesehenen Aussparungen ist zur Verringerung der Nabenlänge und zur Vereinfachung der Montage ein Blechstreifen mit seinen Enden in die Seitenwand jeder Aussparung eingegossen und mit seinem freien mittleren Teil vor das Bolzenauge ausgebogen.

## Fig. 2

EP 0 230 688 A2

## Kolbenbolzensicherung

Die Erfindung betrifft eine Kolbenbolzensicherung für den in den Naben der Bolzenaugen eines Kolbens mit am Kolbenschaft im Bereich der zur Kolbenachse hin zurückgesetzten Naben beidseitig der horizontalen Kolbenbolzenebene vorgesehenen Aussparungen lose gelagerten Kolbenbolzen.

Damit sich der in den Naben der Bolzenaugen lose gelagerte Kolbenbolzen in der Zeit, in der dieser einer Beanspruchung unterliegt, nicht in axialer Richtung verschieben kann, muß er gegen seitliche Bewegungen gesichert sein, sofern dieser nicht bereits durch ein Klemmpleuel in seiner Position festgehalten ist. Im Falle der sogenannten - schwimmenden Kolbenbolzenlagerung, bei der der Kolbenbolzen sowohl im Kolben als auch im kleinen Pleuelauge lose gelagert ist, werden in aller Regel gegenüber den Stirnseiten des Kolbenbolzens ausßenspannende Sicherungsringe aus Runddraht oder Stahlblech angeordnet, die in entsprechende, auf dem Umfang der Naben der Bolzenaugen befindliche Sicherungsrillen einrasten. Insbesondere werden als Sicherungsringe Seegerringe oder Drahtsprengringe gemäß DIN 471, 472 und 73123 benutzt. Auch sind Sicherungsringe nach DIN 6799 bekannt, die radial in die Nuten von Bolzen oder Wellen eingefedert sind, um jedes auch nur geringe axiale Spiel auszuschalten.

In der AT-PS 140 443 ist vorgesehen, den Kolbenbolzen in dem einen Bolzenauge unmittelbar festzusetzen und in dem anderen Bolzenauge entweder in einer fest angeordneten Büchse aus entsprechendem Material und mit entsprechender Wandstärke lose anzuordnen oder in einer lose angebrachten derartigen Büchse festzusetzen. Nach der GB-PS 454 407 ist der Kolbenbolzen in axialer Richtung durch aus dem Kolbenwerkstoff im Bereich der Bolzennaben abgebogene über die Stirnseiten des Kolbenbolzens greifende Abschnitte gesichert. Aus der US-PS 2 322 138 ist eine Kolbenbolzensicherung bekannt, die aus einer elastischen, ringförmigen, gerollten, kegelstumpfförmigen Blattfeder besteht und an den radial nach innen gerichteten als Widerlager für den Kolbenbolzen dienenden Rändern mit Ausnehmungen versehen ist. Diese Sicherungsringe sind jeweils in einer in den Naben der Bolzenaugen angebrachten umlaufenden Ringnut festgesetzt. Die in der DE-OS 20 13 965 beschriebene Kolbenbolzensicherung besteht im wesentlichen aus im Kolbenkörper angeordneten, stirnseitig mit dem Kolbenbolzen zusammenwirkenden Drehkörpern, wobei die Drehkörper als in sich geschlossene Ringe oder dergl. ausgebildet sind und durch plastische Verformung eines Teils der Ringe mit im Kolbenkörper angeordneten Vertiefungen in formschlüssiger Verbindung stehen. Bei der Verwendung der vorstehend aufgeführten Kolbenbolzensicherungen muß in nachteiliger Weise in Kauf genommen werden, daß die Naben der Bolzenaugen stets um einige Millimeter länger als die Kolbenbolzen selbst sein müssen, um den für die Anordnung der Kolbenbolzensicherungen benötigten Platz zur Verfügung zu haben.

Diesem Nachteil kann durch die aus der DE-OS 24 20 616 bekannte Kolbenbolzensicherung begegnet werden, die aus einem hutmanschettenartig gestalteten Sicherungsring besteht, der mit seinem axialen Teil jeweils in die axiale Bohrung des Kolbenbolzens eingesetzt und mit einer im Randbereich seines axialen Teils außenseitig angebrachten, ganz oder nur teilweise umlaufenden Nase in einer in der Bohrung des Kolbenbolzens eingestochenen Ringnut verklammert ist, wobei der radiale, den Kolbenbolzen stirnseitig überdeckende Teil des Sicherungsrings jeweils mit seinem Randbereich auf der Außenseite der Bolzennaben anliegt. Abgesehen davon, daß die Fertigung eines solchen Sicherungsrings mit einem erheblichen Aufwand verbunden ist, ist es notwendig, in der Bohrung des Kolbenbolzens eine Ringnut einzustechen, in die die am axialen Teil des Sicherungsrings angebrachte umlaufende Nase einrasten kann.

Es ist die Aufgabe der vorliegenden Erfindung, eine Kolbenbolzensicherung für den Kolbenbolzen des eingangs beschriebenen Kolbens zu schaffen, die ohne Sicherungsrillen bzw. -nuten mit dem Kolben verbunden und in einfachster Weise ohne Spezialwerkzeuge montiert bzw. demontiert werden kann.

Gelöst ist diese Aufgabe durch einen mit seinen Enden in der Seitenwand jeder Aussparung eingegossenen und mit seinem mittleren freien Teil vor die Stirnseite des Kolbenbolzens ausgebogenen Blechstreifen. Der mittlere Teil der Blechstreifen befindet sich im Ausgangszustand außerhalb des Querschnitts der Bolzenaugen, so daß diese unbehindert bearbeitet werden können. Nach dem Einsetzen des Kolbenbolzens in die Bolzenaugen werden die Blechstreifen vor die Bolzenaugen ausgebogen und nehmen somit eine stabile vorgespannte Position ein.

Die Blechstreifen sind so in die Seitenwand einer jeden Aussparung eingegossen, daß ihre Biegeachse mit dem größten Widerstandsmoment parallel zur Kolbenbolzenachse verläuft und damit die vom Kolbenbolzen ausgehenden vergleichsweise hohen Axialkräfte problemlos aufgenommen werden können.

Im Rahmen der vorzugsweisen Ausgestaltung der Erfindung sind die Enden jedes Blechstreifens vorzugsweise in dem kolbenbodenseitigen Abschnitt der Seitenwand der Aussparungen eingegossen.

Es ist jedoch auch möglich, die Enden jedes Blechstreifens in dem kolbenschaftseitigen Abschnitt der Seitenwand der Aussparungen einzugießen.

Eine weitere Ausbildung der Erfindung sieht vor, das eine Ende des Blechstreifens in dem kolbenbodenseitigen und das andere Ende in dem kolbenschaftseitigen Abschnitt der Seitenwand der Aussparung einzugießen, wobei die Blechstreifen zweckmäßigerweise in etwa parallel mit der Kolbenachse verlaufen.

Zur besseren Verankerung der Enden des Blechstreifens im Kolbenwerkstoff können diese abgebogen, gestaucht, gelocht, gekerbt, gewellt oder dergl. gestaltet sein.

Eine besonders vorteilhafte Ausführungsform der erfindungsgemäßen Kolbenbolzensicherung besteht darin, daß bei Regelkolben mit im Bereich des oberen Kolbenschaftendes angeordnetem Regelglied bzw. -gliedern oder bei Ringträgerkolben mit im Bereich des Ringfeldes eingegossenem Ringträger aus Sondergußeisen wenigstens das eine eingegeossene Ende jedes Blechstreifens mit dem Regelglied bzw. Ringträger durch Schweißen oder Löten verbunden ist.

Bei einem Regelkolben bietet sich darüber hinaus die Möglichkeit, das Regelglied so zu gestalten, daß dieses selbst als Kolbenbolzensicherung genutzt und somit auf eine separate Kolbenbolzensicherung verzichtet werden kann.

Die mit der Erfindung erzielten Vorteile bestehen insbesondere darin, daß für die Anordnung der Kolbenbolzensicherung keine Sicherungsrillen bzw. -nuten in den Naben der Bolzenaugen oder in der Bohrung des Kolbenbolzens erforderlich sind, die Kolbenbolzensicherung im Kolben integriert ist, eine einfache Montage und Demontage ohne Spezialwerkzeug möglich ist und die Naben der Bolzenaugen durch den Wegfall der Sicherungsrillen bzw. -nuten deutlich kürzer und damit leichter ausgebildet werden können.

Die Erfindung ist in den Zeichnungen beispielhaft dargestellt und wird nachfolgend näher erläutert.

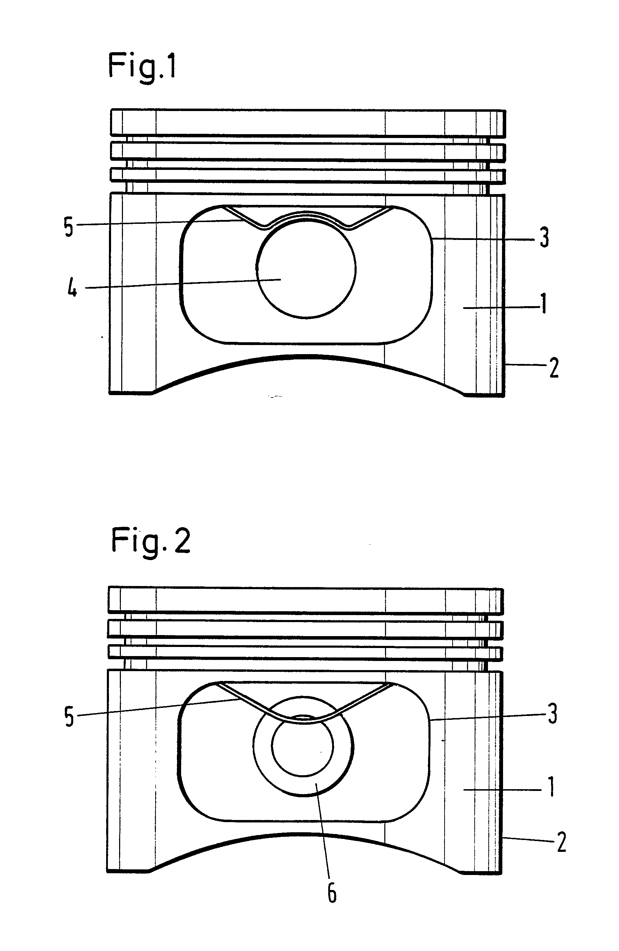

Fig.1 und 2 zeigen jeweils die Seitenansicht eines Kolbens (1) in Bolzenrichtung. Der Kolbenschaft (2) besitzt im Bereich der Naben der Bolzenaugen beidseitig der horizontalen Kolbenbolzenebene eine fensterartige Aussparung (3), und die Naben der Kolzenaugen (4) sind zur Mitte des Kolbens hin verschoben. In den kolbenkopfseitigen Abschnitt der Seitenwand der Aussparung (3) ist ein Blechstreifen (5) mit seinen Enden so eingegossen, daß sein freier Abschnitt nach dem Gießen des Kolbens zwischen dem Scheitel des Bolzenauges (4) und dem kolbenbodenseitigen Abschnitt der Seitenwand der Aussparung (3) verläuft. Nach dem Einsetzen des Kolbenbolzens (6) in die Bolzenaugen (4) wird der mittlere Teil des Blechstreifens (5) vor die Bolzenaugen (4) ausgebogen, so daß eine axiale Verschiebung des Kolbenbolzens (6) nicht möglich ist.

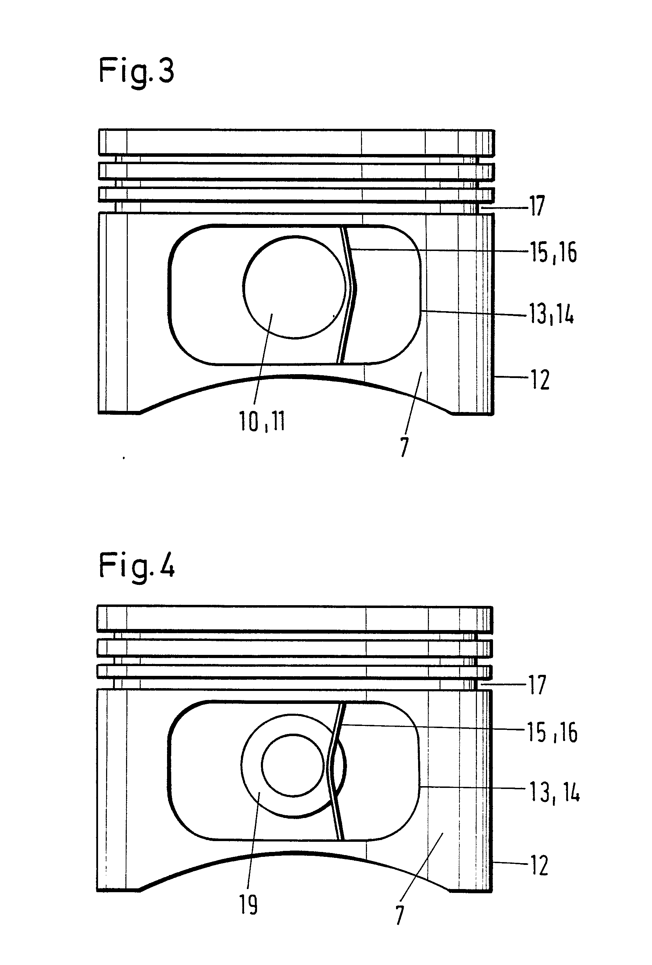

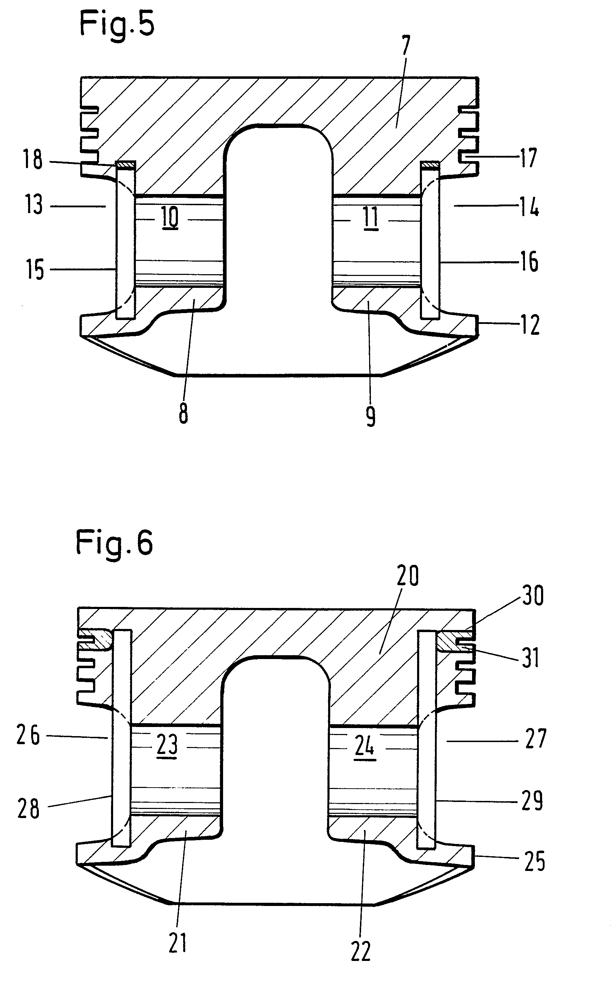

In Fig.3 und 4 ist jeweils eine Seitenansicht eines Kolbens (7) in Bolzenrichtung wiedergegeben und Fig.5 zeigt einen Teillängsschnitt durch den Kolben (7) entlang der die Kolbenachse und die Bolzenachse umfassenden Ebene.

Die Naben (8),(9) der Bolzenaugen (10),(11) sind zur Kolbenmitte hin verschoben und der Kolbenschaft (12) weist im Bereich der Naben (8),-(9) beidseitig der horizontalen Kolbenbolzenebene jeweils eine fensterartige Aussparung (13),(14) auf. Die Blechstreifen (15),(16) sind jeweils mit ihrem einen Ende in dem kolbenschaftseitigen Abschnitt der Seitenwand der Aussparung (13),(14) und mit ihrem anderen Ende in den kolbenbodenseitigen Abschnitt der Seitenwand der Aussparung (13),-(14) eingegossen. Das kolbenbodenseitige Ende der Blechstreifen (15),(16) ist mit dem zwischen der untersten Ringnut (17) und den Naben (8),(9) der Bolzenaugen (10),(11) verlaufenden Regelglied (18) verschweißt. Der freie Teil der Blechstreifen -(15),(16) verläuft nach dem Gießen außerhalb des Querschnitts der Bolzenaugen (10),(11). Nach dem Einsetzen des Kolbenbolzens (19) sind die Blechstreifen (15),(16) mit ihrem mittleren Teil vor die Bolzenaugen (10),(11) ausgebogen.

Bei dem in Fig.6 dargestellten Längsschnitt durch einen Kolben (20) entlang der die Kolbenachse und die Kolbenbolzenachse umfassenden Ebene sind die Naben (21),(22) der Bolzenaugen (23),(24) zur Kolbenmitte hin verschoben und der Kolbenschaft (25) besitzt im Bereich der Naben -(21),(22) beidseitig der horizontalen Kolbenbolzenebene jeweils eine fensterartige Aussparung (26),-(27). Die mit dem einen Ende in dem kolbenschaftseitigen und mit dem anderen Ende in dem kolbenkopfseitigen Abschnitt der Seitenwand der fensterartigen Aussparung (26),(27) eingegossenen Blechstreifen (28),(29) sind mit ihrem kolbenkopfseitigen Ende an den im Bereich der ersten Ringnut (30) eingegeossenen Ringträger (31) aus Sondergußeisen angeschweißt.

**Ansprüche**

1. Kolbenbolzensicherung für den in den Naben der Bolzenaugen eines Kolbens mit am Kolbenschaft im Bereich der zur Kolbenachse hin zurückgesetzten Naben beidseitig der horizontalen Kolbenbolzenebene vorgesehenen Aussparungen lose gelagerten Kolbenbolzen, gekennzeichnet durch einen mit seinen Enden in der Seitenwand jeder Aussparung eingegossenen und mit seinem mittleren freien Teil vor die Stirnseite des Kolbenbolzens ausgebogenen Blechstreifen.

2. Kolbenbolzensicherung nach Anspruch 1, dadurch gekennzeichnet, daß die Biegeachse des Blechstreifens mit dem größten Widerstandsmoment parallel zur Kolbenbolzenachse verläuft.

3. Kolbenbolzensicherung nach den Ansprüchen 1 und 2, dadurch gekennzeichnet, daß der Blechstreifen mit seinen Enden in dem kolbenbodenseitigen Abschnitt der Seitenwand der Aussparungen eingegossen ist.

4. Kolbenbolzensicherung nach den Ansprüchen 1 und 2, dadurch gekennzeichnet, daß der Blechstreifen mit seinen Enden in dem kolbenschaftseitigen Abschnitt der Seitenwand der Aussparungen eingegeossen ist.

5. Kolbenbolzensicherung nach den Ansprüchen 1 und 2, dadurch gekennzeichnet, daß der Blechstreifen mit seinem einen Ende in dem kolbenbodenseitigen und mit seinem anderen Ende in dem kolbenschaftseitigen Abschnitt der Seitenwand der Aussparung eingegossen ist und vorzugsweise in etwa parallel zur Kolbenachse verläuft.

6. Kolbenbolzensicherung nach den Ansprüchen 1 bis 5, dadurch gekennzeichnet, daß die Enden des Blechstreifens abgebogen, gestaucht, gelocht, gekerbt, gewellt oder dergl. ausgebildet sind.

7. Kolbenbolzensicherung nach einem oder mehreren der Ansprüche 1 bis 6, dadurch gekennzeichnet, daß bei Regelkolben mit am oberen Kolbenschaftende angeordnetem Regelglied bzw. -gliedern wenigstens das eine eingegossene Ende jedes Blechstreifens mit dem Regelglied durch Schweißen oder Löten verbunden ist.

8. Kolbenbolzensicherung nach einem oder mehreren der Ansprüche 1 bis 7, dadurch gekennzeichnet, daß bei einem Ringträgerkolben mit einem im Bereich des Ringfeldes eingegossenen Ringträger aus Sondergußeisen wenigstens das eine eingegossene Ende jedes Blechstreifens mit dem Ringträger durch Schweißen oder Löten verbunden ist.

9. Abwandlung der Kolbenbolzensicherung nach einem oder mehreren der Ansprüche 1 bis 8, dadurch gekennzeichnet, daß bei einem Regelkolben mit am oberen Kolbenschaftende angeordneten Regelgliedern das Regelglied selbst als Bolzensicherung ausgebildet sein kann.

0 230 688

## Fig.1

## Fig.2

Fig.3

17
15,16
13,14
12
10,11
7

Fig.4

17
15,16
13,14
12
19
7

## Fig.5

## Fig.6